**Europäisches Patentamt**

(19) **European Patent Office**

**Office européen des brevets**

(11) Numéro de publication: **0 026 682**
**B1**

(12) **FASCICULE DE BREVET EUROPEEN**

(45) Date de publication du fascicule du brevet:
09.02.83

(21) Numéro de dépôt: **80401196.3**

(22) Date de dépôt: **20.08.80**

(51) Int. Cl.³: **G 01 L 1/02**, G 01 L 7/10,
G 01 G 5/04

(54) Dynamomètre hydraulique.

(30) Priorité: **04.09.79  FR 7922063**

(43) Date de publication de la demande:
**08.04.81 Bulletin 81/14**

(45) Mention de la délivrance du brevet:
**09.02.83 Bulletin 83/6**

(84) Etats contractants désignés:
**AT BE CH DE FR GB IT LI LU NL SE**

(56) Documents cités:
**DE-B-1 206 621**
**DE-B-2 035 311**
**DE-C-882 619**
**FR-A-849 468**
**FR-A-1 327 255**
**US-A-1 572 970**
**US-A-3 874 229**

(73) Titulaire: **FREYSSINET INTERNATIONAL (STUP),**
**66 route de la Reine, F-92100 Boulogne Billancourt (FR)**

(72) Inventeur: **Guinard, Pierre, Hameau Bois d'Olivet,**
**Saint-Martin de Nigelles 28130 Maintenon (FR)**

(74) Mandataire: **Bloch, Robert et al, Cabinet ROBERT**
**BLOCH 39 avenue de Friedland, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Dynamomètre hydraulique

L'invention concerne un dynamomètre hydraulique permettant la mesure d'efforts très importants avec une excellente précision.

Un dynamomètre hydraulique de type classique comprend un piston soumis à la force à mesurer et qui exerce sur un liquide une pression que l'on mesure dans un manomètre.

Un tel dispositif n'est cependant pas très précis pour deux raisons. D'une part, la quantité de liquide soumis à la pression est toujours relativement importante, de sorte que la compression du liquide, même si elle est faible, constitue un facteur d'imprécision. D'autre part, il faut prévoir un joint entre le piston et la paroi du cylindre dans lequel il coulisse et le frottement de ce joint sur la paroi absorbe une petite partie de l'effort appliqué et affecte la précision.

Un autre type de dynamomètre est constitué par le dispositif appelé vérin plat et décrit par exemple dans le brevet français 849 468. Ce dispositif comprend une enveloppe ou capsule en tôle formée de deux parois parallèles très proches l'une de l'autre, réunies à leur périphérie par un bourrelet de section sensiblement cylindrique, l'enveloppe ayant ainsi en section une forme d'haltère. L'enveloppe est remplie de liquide et des pièces transmettant les efforts sont placées contre chacune des parois. La mesure de la pression à l'intérieur de l'enveloppe est indicative de l'effort appliqué aux parois.

Un tel dispositif, s'il évite les inconvénients signalés plus haut, présente en revanche l'inconvénient suivant. Comme les parois se déplacent l'une par rapport à l'autre suivant l'effort appliqué, et qu'une déformation a lieu au raccordement entre les parois et le bourrelet périphérique, la section sur laquelle l'effort est appliqué n'est pas rigoureusement constante et donc la variation de la pression en fonction de la force appliquée n'est pas exactement linéaire. En outre, la tôle constituant l'enveloppe doit être de forte épaisseur, ce qui implique un certain effort de déformation. Ceci est également un facteur d'imprécision.

L'invention vise un dynamomètre hydraulique ne présentant aucun des inconvénients exposés ci-dessus et doté d'une excellente précision quoique de structure très simple.

Le principe de l'invention consiste à améliorer le dynamomètre du type vérin plat en remplaçant l'enveloppe à section en haltère par une capsule plate de faible volume dont la périphérie est totalement encastrée.

Plus particulièrement, l'invention a pour objet un dynamomètre hydraulique du type tel qu'il est défini par la revendication 1.

Grâce à l'encastrement de la périphérie de la capsule, on peut fixer les parois de cette capsule respectivement à la contre-pièce et au piston par exemple par collage avec une résine époxyde. La paroi de la capsule opposée au piston, ainsi appliquée étroitement contre la contre-pièce, n'a pas à résister par elle-même à la pression et les parois de la capsule peuvent être de faible épaisseur, contrairement au dispositif du type vérin plat.

En outre, le volume de liquide contenu dans la capsule peut être réduit par rapport au cas du vérin plat, ce qui restreint l'influence de la compressibilité du liquide.

Ainsi, grâce à l'encastrement de la périphérie de la capsule, l'application de l'effort ne se traduit par aucun déplacement significatif du piston ni aucune déformation sensible de la capsule. La surface d'application est donc constante.

Des dynamomètres de ce type peuvent être montés à demeure dans les pieds de structures telles que des silos, pour mesurer le poids de la matière stockée.

L'invention sera bien comprise à la lecture de la description ci-après, pour la compréhension de laquelle on se reportera aux dessins annexés.

Dans les dessins:
- la figure 1 est une vue en coupe d'un dynamomètre hydraulique selon l'invention, dans une première forme de réalisation.
- la figure 2 montre à plus grande échelle un détail de la figure 1.
- la figure 3 est une vue analogue à la figure 1, mais pour une variante de réalisation.

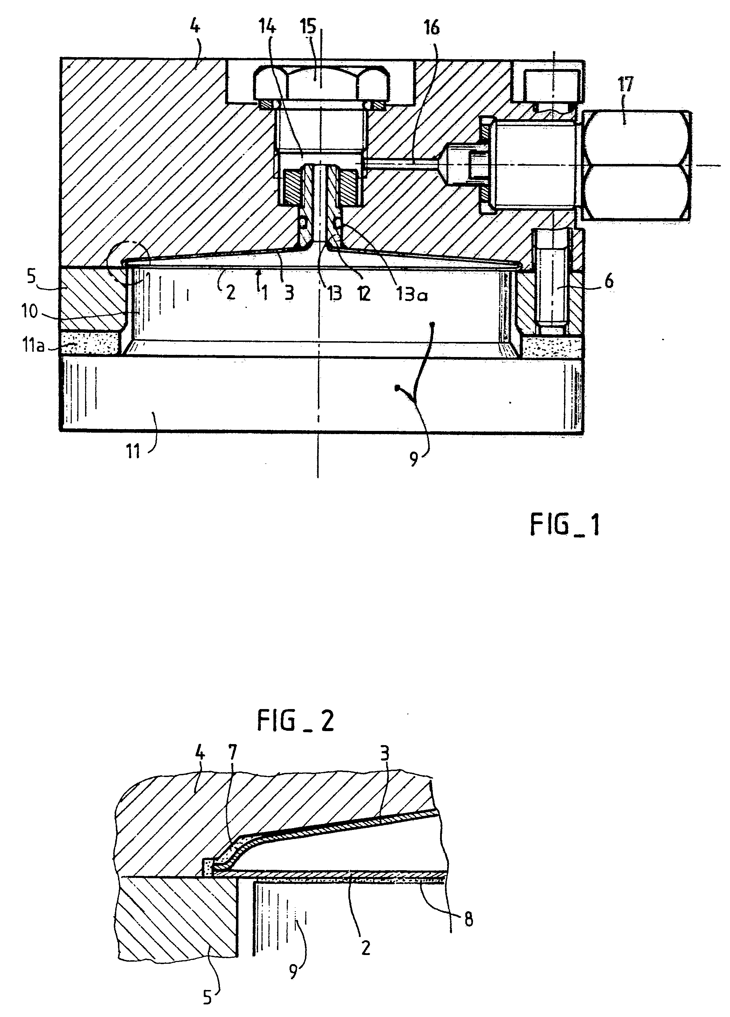

Le dynamomètre hydraulique représenté à la figure 1 comprend une capsule 1 en forme générale de disque remplie complètement d'un liquide de faible compressibilité tel que l'huile. La capsule 1 est constituée d'une paroi inférieure plane 2 et d'une paroi supérieure 3 conique, soudées à leur périphérie coome on le voit mieux sur la figure 2.

La partie périphérique de la capsule 1 est encastrée, ou pincée, entre une contre-pièce 4 et une bague 5 fixée à la contre-pièce par des vis telles que 6. Dans cette zone, la contre-pièce est usinée de manière qu'un espace subsiste entre elle et la paroi 3 de la capsule, et cet espace est rempli par une résine synthétique durcissable 7 qui fait aussi office de colle.

Le paroi inférieure 2 de la capsule est collée sur la face 8 d'un piston 9 par l'intermédiaire également d'un film de la même résine.

Ceci permet, lorsqu'on débarasse la capsule de l'air qu'elle contient avant de la remplir d'huile, d'éviter que la paroi inférieure 2 vienne en contact avec la paroi supérieure 3 sous l'effet de la dépression.

La partie cylindrique 10 du piston, qui se termine par la face 8, a un diamètre très peu inférieur au diamètre intérieur de la bague 5, l'écart étant juste égal au jeu de fonctionnement nécessaire. Ceci permet de réduire au maximum la partie libre de la paroi inférieure 2, c'est-à-dire la partie qui n'est en contact ni avec la bague 5, ni avec le piston 9.

A cette partie 10 se raccorde une collerette 11 de même diamètre que le diamètre extérieur de la contre-pièce 4 et de la bague 5. Une pièce élastique 11a est interposée entre la collerette 11 et la bague 5 pour fermer l'espace entourant le piston.

En vue de permettre la mesure de la pression à l'intérieur de la capsule, la paroi supérieure 3 comporte un trou central et la zone 12 entourant ce trou est soudée à une douille 13 montée dans un alésage de la contre-pièce et munie d'une gorge dans laquelle est logé un joint d'étanchéité 13a. L'alésage s'élargit ensuite pour former une chambre 14 fermée par un bouchon fileté 15. Un conduit 16 fait communiquer la chambre 14 avec un organe de mesure de pression tel qu'un manomètre ou un capteur 17.

On notera que la capsule est constituée avantageusement d'une matière facile à souder et résistant à la corrosion telle que le bronze ou un acier inoxydable. Les parois de la capsule peuvent être de faible épaisseur, par exemple de 0,2 mm, étant donné qu'elles sont parfaitement en appui contre la couche de résine 7 et qu'elles n'ont donc pas à supporter la pression.

Bien entendu, la forme représentée pour la capsule n'est donnée qu'à titre d'exemple. Mais on a toujours avantage à donner une forme aplatie à la capsule, car on limite ainsi le volume de liquide qui y est contenu et donc la compression du liquide. Cela contribue à améliorer la précision de la mesure.

Le dispositif décrit fonctionne pratiquement sans déplacement du piston, celui-ci étant au plus de quelques microns même lorsque l'effort appliqué est très élevé, celui-ci pouvant dépasser 1000 bars. On peut donc considérer la section d'application de l'effet comme rigoureusement constante et égale à la section de la partie 10 du piston.

L'invention n'est pas limitée à la forme de réalisation décrite. On peut envisager par exemple un dispositif en forme de couronne au lieu du dispositif cylindrique décrit. Dans ce cas, la capsule serait annulaire et le raccordement de ses parois se ferait à sa périphérie intérieure et à sa périphérie extérieure. Les autres composants seraient également modifiés en conséquence.

Le dynamomètre décrit est destiné en particulier à être monté à poste fixe à la base d'un équipement tel qu'un silo pour mesurer le poids de la matière contenue dans le silo. Si par exemple le silo comporte trois pieds, on intégrera un dynamomètre à chaque pied et le poids sera déterminé par la somme des trois valeurs de mesure.

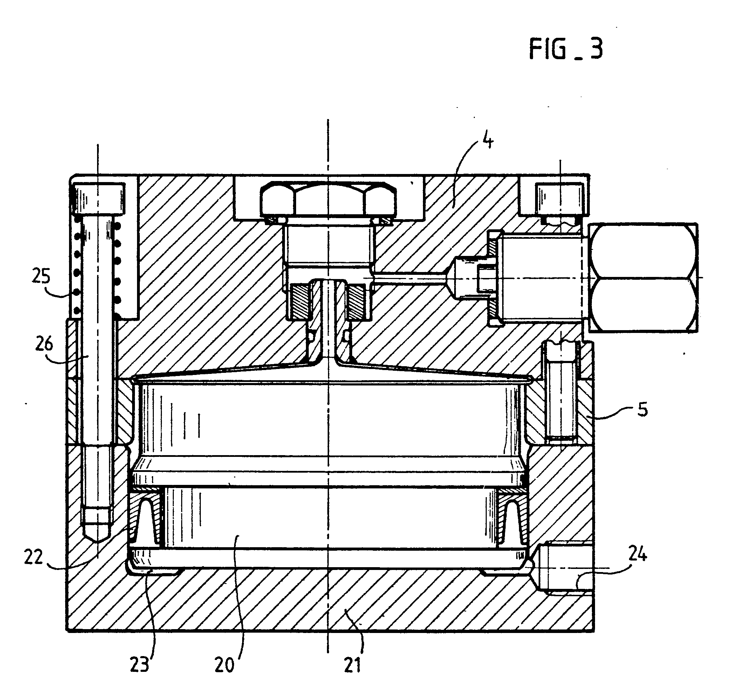

La version représentée à la figure 3 est destinée en revanche à être introduite dans un ouvrage existant et peut être démonté. La mesure peut avoir pour but par exemple de déterminer l'évolution dans le temps de la tension de câbles de précontrainte.

Dans cette variante, au lieu du piston 9 de la réalisation décrite plus haut, il est prévu un piston 20 monté à l'intérieur d'un cylindre 21.

Un joint à lèvre 22 est monté dans une gorge du piston 20 et frotte sur la paroi du cylindre. Une chambre 23 est formée dans le cylindre en arrière du piston 20 et communique avec une source de pression, non représentée, par un orifice 24 ménagé dans le cylindre.

Le cylindre 21 est rappelé en contact avec la bague 5 par des ressorts tels que 25 montés entre le fond d'évidements pratiqués dans la contre-pièce et la tête de tiges 26 vissées au cylindre et traversant librement la bague 5 et la contre-pièce 4.

Pour le reste, le dispositif est identique à celui représenté à la figure 1.

Dans la position représentée sur la figure 3, la dimension axiale du dispositif est minimale puisque le cylindre 21 est en contact avec la bague 5. Aucune pression n'est appliquée. L'introduction du dispositif dans l'emplacement prévu à cet effet dans l'ouvrage se fait dans cette position.

Ensuite, on applique la pression pour mettre en charge le dispositif, c'est-à-dire pour lui permettre de transmettre les efforts. L'application de la pression a pour effet, le piston 20 étant fixe, d'écarter le cylindre 21 de la bague 5 contre l'action des ressorts 25. De ce fait, les faces radiales de la contre-pièce et du cylindre entrent pleinement en contact avec l'ouvrage et la mesure de l'effort peut être effectuée.

Il faut noter que le frottement dû au joint 22 n'intervient pas dans la mesure car il se produit au cours de la phase de mise en charge.

Pour démonter le dispositif, on relâche la pression, le cylindre 21 revient en contact avec la bague 5 et le dispositif peut être retiré.

**Revendications**

1. Dynamomètre hydraulique comprenant une capsule (1) plate à paroi mince remplie de liquide essentiellement incompressible et reliée à un instrument de mesure de la pression (17), capsule enserrée entre deux organes rigides assurant la transmission à celle-ci de la force à mesurer, caractérisé par le fait que ces deux organes sont d'une part un piston (9) et d'autre part une culasse (4) et un cylindre (5), l'un des organes étant centre sans contact par rapport à l'autre, tandis que la capsule, appuyée contre le piston (9) et la culasse (4) du cylindre (5), a son bord encastré dans une gorge périphérique ménagée au raccordement de la culasse (4) et du cylindre (5) afin que la surface libre de capsule soit réduite à une portion annulaire plate étroite comprise entre le piston (9) et le cylindre (5).

2. Dynamomètre selon la revendication 1, caractérisé par le fait que la capsule (1) est fixée par collage tant au piston (9) qu'à la culasse (4).

3. Dynamomètre selon la revendication 1, caractérisé par le fait que la capsule comprend une paroi plane (2) appliquée contre le piston (9) et une paroi conique (3) appliquée contre la culasse (4), au sommet de laquelle est ménagée une ouverture de remplissage et de raccordement à l'appareil de mesure de la pression (17).

4. Dynamomètre selon la revendication 1, caractérisé par le fait que le piston (9) est, hors du cylindre (5), élargi au diamètre extérieur de celui-ci, et qu'un organe (11a) souple dans le sens axial, ferme l'espace entre le cylindre et la partie élargie (11) du piston, et maintient centrées les deux pièces.

5. Dynamomètre selon la revendication 1, caractérisé par le fait que le cylindre est en deux parties (5, 21) reliées par des moyens élastiques (25, 26), le piston (20) coulissant de manière étanche dans la seconde partie (21), laquelle comporte une autre culasse (21) reliée à des moyens de mise en pression hydraulique permettant la mise en charge du dynamomètre.

**Patentansprüche**

1. Hydraulisches Dynamometer mit einer flachen, dünnwandigen Kapsel (1), die mit einer im wesentlichen inkompressiblen Flüssigkeit gefüllt und mit einem Druckmeßinstrument (17) verbunden sowie zwischen starren Organen eingespannt ist, die die zu messende Kraft auf die Kapsel übertragen, dadurch gekennzeichnet, daß diese beiden Organe einerseits ein Kolben (9) und andererseits ein Zylinderkopf (4) und ein Zylinder (5) sind, wobei das eine dieser Organe berührungsfrei zentriert in bezug zu dem anderen ist, während die Kapsel, die sich gegen den Kolben (9) und den Zylinderkopf (4) des Zylinders (5) abstützt, mit ihrem Rand in eine Umfangsnut eingespannt ist, die in die Verbindung des Zylinderkopfes (4) und des Zylinders (5) eingearbeitet ist, so daß die freie Oberfläche der Kapsel auf einen schmalen, ebenen ringförmigen Bereich zwischen dem Kolben (9) und dem Zylinder (5) vermindert ist.

2. Dynamometer nach Anspruch 1, dadurch gekennzeichnet, daß die Kapsel (1) durch Klebung sowohl mit dem Kolben (9) als auch mit dem Zylinderkopf (4) verbunden ist.

3. Dynamometer nach Anspruch 1, dadurch gekennzeichnet, daß die Kapsel eine gegen den Kolben (9) anliegende plane Wand (2) und eine gegen den Zylinderkopf (4) anliegende konische Wand (3) hat und daß im Scheitel des Zylinderkopfes (4) eine Öffnung zum Füllen und zum Verbinden mit dem Druckmeßinstrument (17) angeordnet ist.

4. Dynamometer nach Anspruch 1, dadurch gekennzeichnet, daß der Kolben (9) außerhalb des Zylinders (5) auf dessen Außendurchmesser vergrößert ist und daß ein in axialer Richtung nachgiebiges Organ (11a) den Zwischenraum zwischen dem Zylinder und dem vergrößerten Teil (11) des Kolbens schließt und die beiden Teile zentriert hält.

5. Dynamometer nach Anspruch 1, dadurch gekennzeichnet, daß der Zylinder aus zwei durch elastische Mittel (25, 26) verbundenen Teilen (5, 21) besteht und der Kolben (20) abgedichtet in dem zweiten Teil (21) gleitet, der einen weiteren Zylinderkopf (21) umfaßt, der mit hydraulischen Mitteln zur Druckbeaufschlagung verbunden ist, die die Inbetriebnahme des Dynamometers ermöglichen.

**Claims**

1. Hydraulic dynamometer comprising a flat, thin-walled capsule (1) filled with essentially incompressible liquid and connected to a pressure measuring instrument (17), capsule clamped between two rigid members ensuring transmission thereto of the force to be measured, characterized in that these two members are on the one hand a piston (9) and on the other hand a cylinder head (4) and a cylinder (5), one of the members being centred without contact with respect to the other, whilst the capsule, bearing against the piston (9) and the cylinder head (4) of the cylinder (5), has its edge embedded in a peripheral groove made at the connection of the cylinder head (4) and the cylinder (5) so that the free surface of the capsule is reduced to a narrow flat annular portion included between the piston (9) and the cylinder (5).

2. Dynamometer according to Claim 1, characterized in that the capsule (1) is fixed by adhesion both to the piston (9) and to the cylinder head (4).

3. Dynamometer according to Claim 1, characterized in that the capsule comprises a flat wall (2) applied against the piston (9) and a conical wall (3) applied against the cylinder head (4), at the apex of which is arranged an opening for filling and connection to the pressure measuring apparatus (17).

4. Dynamometer according to Claim 1, characterized in that the piston (9) is, outside the cylinder (5), enlarged to the outer diameter of the latter, and in that an axially supple member (11a) closes the space between the cylinder and the enlarged part (11) of the piston, and maintains the two pieces centred.

5. Dynamometer according to Claim 1, characterized in that the cylinder is in two parts (5, 21) connected by elastic means (25, 26), the piston (20) sliding hermetically in the second part (21), which comprises another cylinder head (21) connected to hydraulic pressurization means allowing the charging of the dynamometer.

FIG_1

FIG_2

FIG _ 3